# EUROPÄISCHE PATENTSCHRIFT

(11) **EP 1 294 829 B1**
(45) Veröffentlichungstag und Bekanntmachung des Hinweises auf die Patenterteilung: **07.01.2015**
(21) Anmeldenummer: 01956273.5
(22) Anmeldetag: 12.06.2001
(51) Int. Cl.: C10J 3/24, C10J 3/72

(54) **VERFAHREN UND VORRICHTUNG ZUM VERGASEN GROSSSTÜCKIGER FESTBRENNSTOFFE, INSBESONDERE BIOMASSE**
METHOD AND DEVICE FOR GASIFYING LARGE PIECES OF SOLID FUELS, ESPECIALLY BIOMASS
PROCEDE ET DISPOSITIF DE GAZEIFICATION DE COMBUSTIBLES SOLIDES EN GROS MORCEAUX, EN PARTICULIER D'UNE BIOMASSE

(30) Priorität: 13.06.2000 DE 10028394
(43) Veröffentlichungstag der Anmeldung: 26.03.2003
(73) Patentinhaber: Herlt, Christian, 17194 Vielist (DE)
(72) Erfinder: Herlt, Christian, 17194 Vielist (DE)
(74) Vertreter: Kietzmann, Manfred
(86) Internationale Anmeldenummer: PCT/DE2001/002214
(87) Internationale Veröffentlichungsnummer: WO 2001/096500

(56) Entgegenhaltungen:
- EP-A- 0 045 256
- US-A- 4 164 397

## Beschreibung

### [Stand der Technik]

Die Erfindung betrifft ein Verfahren und eine Vorrichtung zur Verschwelung von großstückigen, festen Brennstoffen, vorzugsweise Biobrennstoffen. Es ist insbesondere geeignet für die Vergasung von unzerkleinerten großen Ballen aus Getreidestroh und Heu.

Gepreßte Ballen mit kleiner Leistung zu verbrennen oder zu verschwelen ist deshalb schwierig, weil von dem Stroh nach Abgabe der Pyrolysegase zunächst halmähnliche Strukturen aus Strohkoks übrigbleiben, in die sich viel Asche einlagert. So entsteht eine den noch unverbrannten Ballen vor Temperatur und Zutritt von Verbrennungsluft abschließende Schicht, die im weiteren eine hohe Brenn- bzw. Vergasungsunwilligkeit verursacht. Deshalb ist eine kontinuierliche Fortsetzung der Ballenvergasung nach anfänglich guter Reaktion bei kleiner, thermischer Leistung nur mit zusätzlichen Verfahrensschritten und besonderen Vorrichtungen realisierbar.

Bekannt ist hierzu die Ballen vor der thermischen Nutzung mechanisch zu zerkleinern. Dies ist aber technisch aufwendig und verringert, insbesondere in kleinen Anlagen, die. Wirtschaftlichkeit der Strohverwertung. US-A-0 456 256 und US-A-4 164 397 beschreiben Verfahren und Vorrichtungen zum Vergasen von Bromasse.

Entsprechend DE-OS-33 27 662 ist weiterhin bekannt, durch das Einschneiden von Durchgangsöffnungen in den,Ballen für die Heranleitung von Verbrennungsluft eine größere reagierende Verbrennungsoberfläche zu schaffen. Diese Maßnahme genügt aber nur bei hoher Verbrennungeleistung.

In DE-OS- 42 22 663 wird der Ballen durch Glühstäbe in kleinere Teile zerlegt, die dann, auch durch die größere Oberfläche, leichter verschwelt werden können. Hierzu muß aber von außen Wärmeenergie in die Glühatäbe eingeführt werden und auf Grund der hohen Temperaturen verursacht auch deren Ausführung und Standfestigkeit erhöhten Aufwand.

Auch durch das Eindüsen von Verbrennungsluft, wie u.a. in DE-OS 196 48 639 beschrieben, läßt sich eine vollständige Ballenverschwelung bzw. -verbrennung nur erreichen bei hoher, thermischer Leistung und hohem Einblasdruck. Um das Ziel der Ballenzersetzung zu erreichen benötigt man hierbei viel Luft, um aber ein hochwertiges Brenngas zu erzielen soll möglichst wenig Verbrennungsluft in den Vergasungsbreich gelangen. Deshalb wurde gemäß DE-OS 19 72 03 31 vorgeschlagen, heiße ausgebrannte Abgase in den Entgasungsofen zurückzuführen, um so durch höhere Temperatur im Vergaser und durch die Strömungswirkung mehr Reaktion zu bewirken. Dadurch steigt aber der Inertgasanteil des entstehenden Brenngases erheblich an, der Energieinhalt und die Zündwilligkeit vermindern sich entsprechend.

In eine ähnliche Richtung zielen auch die FR 0045256 A2, bei der das Brennmaterial in Richtung Abbrandzone vorgeschoben wird, und die US 4 164 397, bei der das Brennmaterial von oben nachrutscht. Hier wird jeweils ein Teil des erzeugten Gases abgezogen und mit Frischluft vermischt in den Brennraum eingeblasen, um eine thermische Einwirkung auf das Brennmaterial zu erzielen.

Gemäß der DE OS 31 09 917 können auch mechanische Ascheabstreifer benutzt werden, um den Ballen brennwillig zu erhalten. Diese optimal zu positionieren und entsprechend der auftretenden thermischen und mechanischen Belastungen im praktischen Betrieb auszuführen ist aber konstruktiv schwierig und in der Ausführung teuer.

Die Anfeuerung von Heizkesseln für die Strohvergasung bereitet mit den bekannten Lösungen Probleme, da die Strohballen außen häufig feucht sind. Ein Freiraum für Anheizmaterial ist nicht vorhanden.

Die Strohasche enthält Fraktionen mit einem relativ niedrigen Schmelzpunkt bei etwa 600 Grad C. Diese können an kälteren Oberflächen zu lästigen Anbackungen führen. Das erfolgt insbesondere an stählernen Teilen der Wärmetauscher und führt zu erheblich schlechteren Wärmeübergang. Die Entfernung der sich bildenden Schlackeschicht ist relativ aufwendig.

### [Aufgabe der Erfindung]

Der Erfindung liegt die Aufgabe zugrunde, eine Vorrichtung und ein Verfahren zu schaffen, mit dem
- Ganzballen und andere großstückige, vergasbare Materialien bei kleiner, thermischer Leistung geregelt zersetzt werden,
- ein leichtes Anfeuern von feuchtem Brenngut und erfolgt,
- Verkrustungen auf den Wärmetauschern verhindert werden,
- die Nachteile der bekannten Lösungen vermieden werden.

Die Aufgabe wird erfindungsgemäß dadurch gelöst, dass das zu vergasende Material strömend beaufschlagt wird mit demselben Gas, das im Vergaserraum vorhanden ist und dazu eine mit von außen zugeführter Energie angetriebene, temperaturfest ausgeführte Ventilatoreinheit integriert ist. So wird erreicht, daß freier Sauerstoff und die mit dem Gas transportierte Wärme in den Ballen bzw. die Brennmaterialfüllung eindringen können und der Prozeß der thermischen Zersetzung, trotz Asche- und Koksbildung oder nur geringer Kontaktoberfläche, voranschreitet. In Ausgestaltung der Erfindung sind an die Ventilatoreinheit Kanäle angeschlossen, die das bewegte Gas zu den für die Zersetzung des vergasbaren Materials vorteilhaften Stellen leiten, an denen dann das Gas aus Öffnungen ausströmt gegen das zu vergasende Material. Durch Änderung der Leistung der Ventilatoreinheit kann der Vergasungsprozeß, zusammen mit der Sauerstoffzufuhr in dem Vergaserraum, gesteuert werden. Durch diese Verfahrensweise wird eine vollständige Verschwelung auch brennunwilliger Materialien erreicht, wie z.B. Getreidestroh-Rundballen mit 1,8 m Durchmesser, die festgepreßt und durch Freilagerung feucht sind, und dies bei nur geringer Vergasungsleistung, die einer Feuerungsleistung des erzeugten Gases ab etwa 60 kW entspricht. Die Ventilatoreinheit wird so ausgeführt, daß auftretende mechanische Belastungen durch Brennstoff und Beschickung nicht zu Beeinträchtigungen führen und ist vorzugsweise mit in den Vergaserraum eingebaut, kann aber auch außerhalb plaziert sein und deren wändeberührten Teile sollen aus Werkstoffen bestehen, die geeignet sind für die auftretenden Temperaturen bis etwa 500 Grad C. Es kommen dafür vorzugsweise Edelstähle in Frage. Die Ventilatoreinheit wird mit Energie von außen betrieben, vorzugsweise elektromotorisch.

Gegenstand der Erfindung ist ein Verfahren und eine Vorrichtung, wie in Ansprüche 1 bis 7 beschrieben.

Durch die Nutzung der Erfindung können die in der Landwirtschaft und bei der Landschaftspflege anfallenden großen Mengen an gras- und halmartigen Materialien, auch die zum Zwecke der Energiegewinnung angebauten Pflanzen bzw. die Reste stofflicher Pflanzennutzung zu Großballen verarbeitet, für die energetische und stoffliche Nutzung dezentral erfaßt, gelagert und verwertet werden. Die damit mögliche Verschwelung ganzer Ballen zu hochwertigem Brenngas bei kleiner Leistung schafft die Voraussetzungen, um in dezentralen Feuerungsanlagen, vorzugsweise im ländlichen Raum, sauberste Verbrennung zu realisieren, ermöglicht aber so auch deren stoffliche Nutzung in künftigen Verwertungslinien. Auch durch den Einsatz der Erfindung in Vergasungsanlagen für andere stückige Materialien, wie grobes Scheitholz oder Müll, kann eine erhebliche Stabilisierung und Intensivierung des Vergasungsprozesses erreicht werden und das zu vergasenden Material darf so gröber und sperriger sein. Die Menge der zuzusetzende Verbrennungsluft kann reduziert werden, das Brenngas wird sauerstoff- und inertgasärmer und so wertvoller für die Verwendung im Verbrennungsmotor.

Die Erfindung ist also generell nutzbar um große Vergaserräume realisieren zu können, so die notwendige Zerkleinerung von Biobrennstoff vor der Vergasung zu vermindern und die Steuerbarkeit des Prozesses zu verbessern.

Durch einen unten erweiterten Vergaserraum gemäß Anspruch 8 ist Platz für Anfeuermaterial vorhanden. Damit wird eine problemloses Anfeuern von feuchten Strohballen ermöglicht.

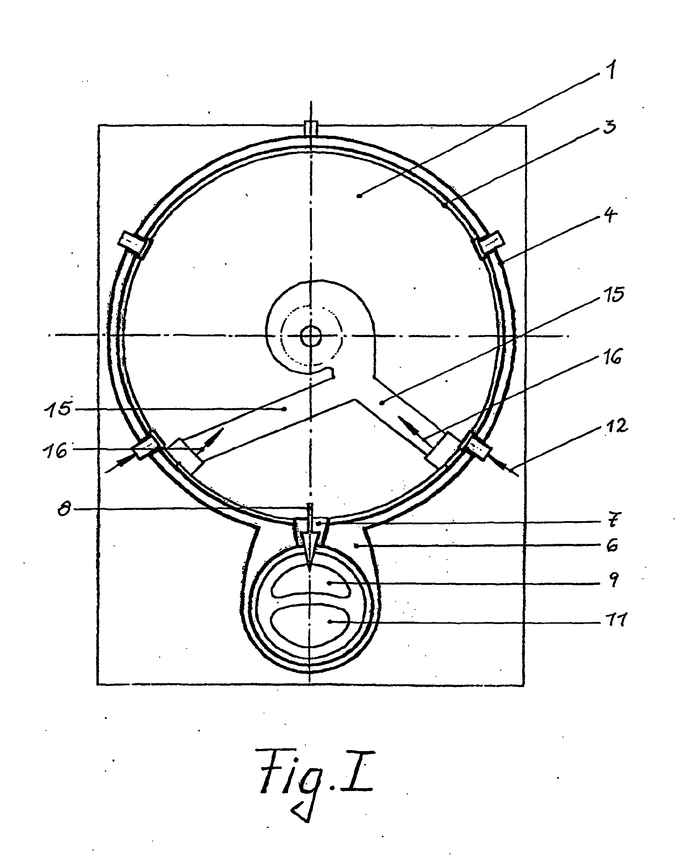

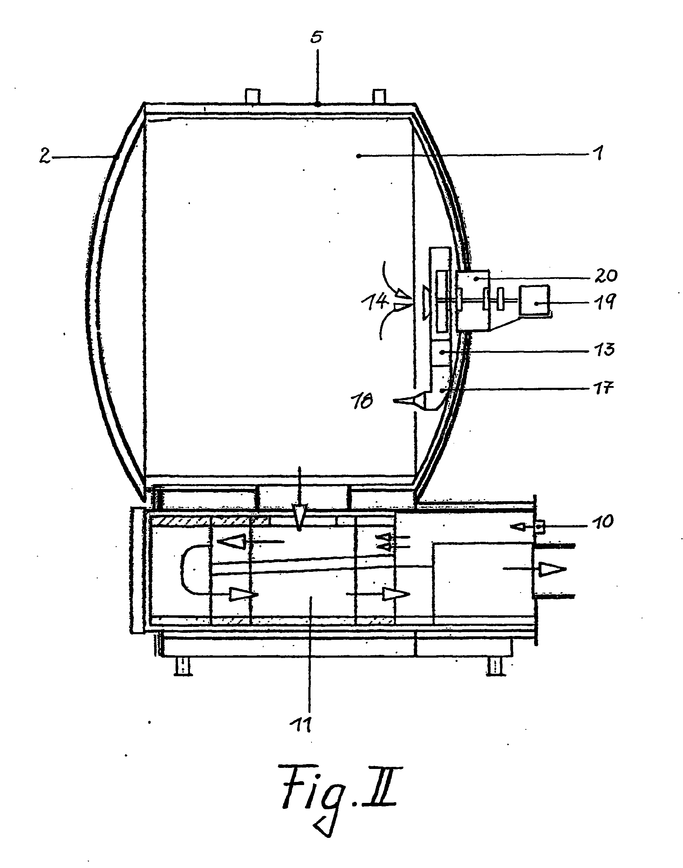

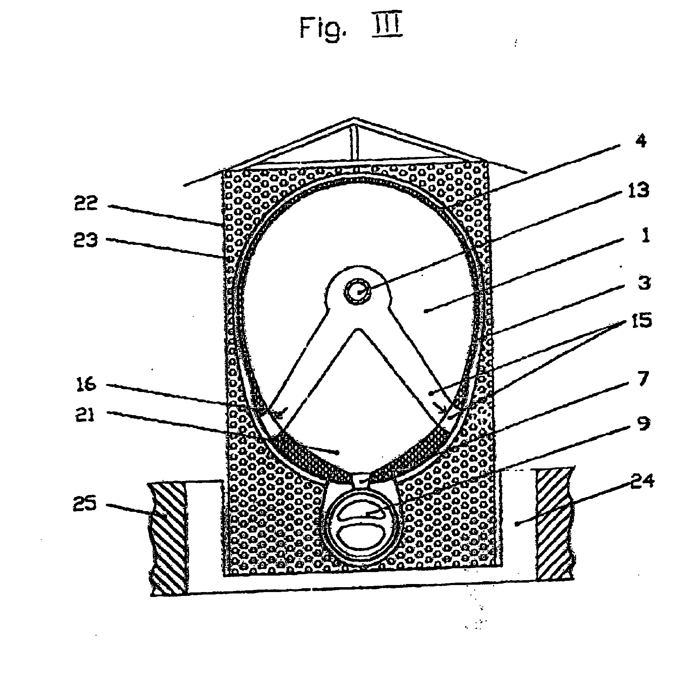

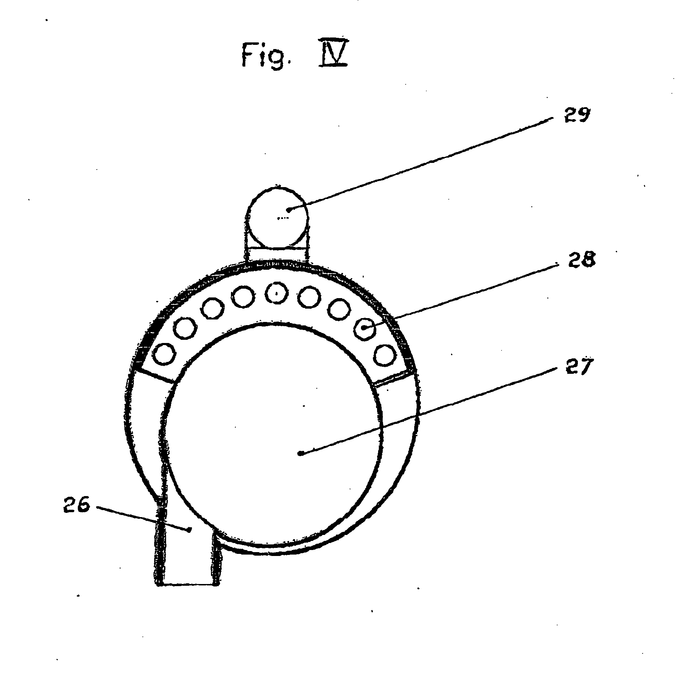

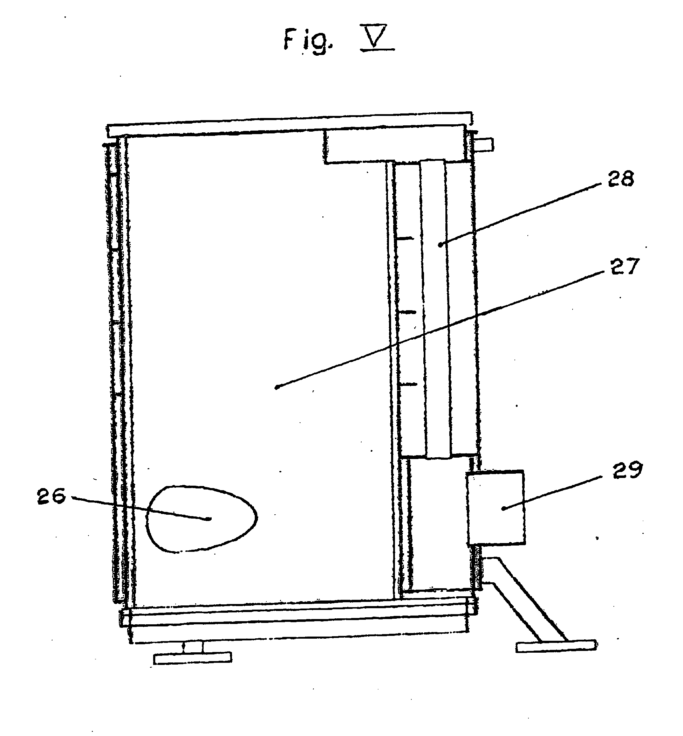

In weiterer Ausgestaltung der Erfindung gemäß Figur 4 enthält die Baugruppe zur Übertragung der Heizgaswärme an das Kesselwasser zuerst einen Bereich, dessen metallische, wassergekühlte Wandung an der Oberfläche einen keramische Beschichtung aufweist, an der sich kaum Anbackungen festsetzen. In diesem ersten räumlichen Bereich erfolgt eine Abkühlung des Abgases auf unter 600 Grad C, so dass im weiteren nur noch feste Asche im Abgas enthalten ist. Weiterhin ist dieser Raum so gestaltet, dass durch Zyklonwirkung und/oder Sedimentation in bekannter Weise Flugasche aus dem Abgas ausgetragen werden kann.

### [Beispiele]

Die Erfindung soll nachfolgend anhand eines Ausführungsbeispiel näher erläutert werden.

Hierfür zeigen:
- Fig. I: eine Strohballen-Vergaser-Feuerung im Querschnitt mit zwei seitlich gegenüberliegend angeordneten Gaszuführungskanälen,
- Fig. II: eine gleiche Anlage im Längsschnitt mit nur einer Ausblasrichtung,
- Fig. III: einen Strohballenvergaser im Querschnitt mit nach unten vergrößertem Vergaserraum in Freiaufstellung,
- Fig. IV: eine Wärmetauschereinheit im Querschnitt,
- Fig. V: dieselbe Wärmetauschereinheit im Längsschnitt.

Der nicht dargestellte Stroh-Rundballen wird durch die große, verschließbare Beschickungsöffnung 2 in den etwas größeren Vergaserraum 1 eingelegt. Der ganze Vergaserraum 1 ist innen mit einer keramischen Schicht 3 ausgekleidet, um den Wärmeabfluß durch die stählernen Wände 4 des Kesselkörper 5 in das Kesselwasser 6 gering zu halten. Nach unten ist im Vergaserraum ein Schlitz 7 vorgesehen, durch den die Schwelgase 8, symbolisiert durch den Pfeil, in die Wirbelbrennkammer 9 eintreten, dort mit Sekundärluft 10 vermischt werden und in der Nachbrennkammer 11 ausbrennen. Der Eintritt von Verbrennugsluft in den Vergaserraum 1 erfolgt geregelt über die Primarluftöffnungen 12. Die Ventilatoreinheit 13 saugt Gas 14 aus dem Vergaserraum 1 an und drückt dieses durch die Gaszuführungskanäle 15 und die darin angeordneten Gasaustrittsöffnungen 16, die auch düsenartig ausgeführt sein können, beschleunigt gegen den Strohballen.

Während in Fig. I beidseitig gegenüberliegend angeordnete Gaszuführungskanäle 15 vorgesehen sind und der Strohballen so auf diesen aufliegt, ist in Fig. II nur ein Gaszuführungskanal 17 skizziert, der nur die hintere Stirnseite des Ballens mit beschleunigtem Heißgas 18 beaufschlagt. Dies ist einfacher in der Realisierung und genügt in vielen Fällen, insbesondere wenn der Einblasdruck erhöht ist. Die Ventilatoreinheit 13 ist angetrieben durch einen außerhalb angeordneten Elektromotor 19. Die Wellenlagerung 20 enthält eine nicht näher dargestellte, warmfeste, annähernd gasdichte Wellenabdichtung zum Vergaserraum 1 hin und eine Kühlung für die Lagerung. Die Strohballen-Vergaser-Feuerungsanlage kann auch so ausgeführt sein, dass man einen zweiten Ballen oben auf den ersten auflegen kann wodurch in Verbindung mit einer geeigneten Ballenschleuse der kontinuierliche Feuerungsbetrieb ermöglicht wird.

In Figur III ist der Vergaserraum 1, nach unten enger zulaufend, erweitert durch den Raum für Anheizholz 21. In diesen legt man zum Starten des Kessels zunächst ein kleines Häufchen Brennholz auf den Schlitz 7, darauf ein kleines Feuer, z.B. einen brennenden Kohlenanzünder, startet das Saugzuggebläse und der Kessel brennt so nahezu rauchfrei an, wie ein bekannter Saugzug-Holzvergaser-Heizkessel. Danach kann in den Raum 21 weiteres Brennholz zugegeben werden und darauf legt man dann den Strohballen, der so auch feuchtes Stroh enthalten kann. Der Strohballen-Vergaserheizkessel gemäß Figur III ist frei aufgestellt und enthält deshalb eine Blechaußenverkleidung 22. Der eigentliche Kesselkörper ist gegen Wärmeverluste isoliert, vorzugsweise mit einem Schüttdämmstoff 23. Zur besseren Zugänglichkeit ist die Ablage in das Erdreich 25 abgesenkt und lagert in einem Fundament 24.

In Figur IV ist die Wärmetauschereinheit dargestellt, in die Heizgase von der Anlage gemäß Figur I kommend durch den Heizgaseintrittskanal 26 tangential in den räumlichen Bereich 27 einströmen und dann in diesem entgegen der Schwerkraft aufsteigen. Durch die Zyklon- und auch Sedimentationswirkung, bedingt durch den großen Raumquerschnitt, erfolgt eine Ascheabscheidung nach unten. Der wassergekühlte, räumliche Bereich 27 ist mit einer keramischen Oberflächenbeschichtung versehen, die nicht dargestellt ist. Das Heizgas wird in diesem Bereich auf 600 Grad C abgekühlt. Die weitere Wärmeabgabe an das Kesselwasser erfolgt in den Wärmetauscherrohren 28. Durch den Abgasstutzen 29 sowie im weiteren durch ein nicht dargestelltes Saugzuggebläse wird das Abgas dem Schornstein zugeführt.

In Figur V ist die Baugruppe nach Figur IV nochmals im Längsschnitt verdeutlicht. Die Ausführung des räumlichen Bereiches 27 kann auch Gestaltungsmerkmale eines bekannten Staubabscheidezyklons aufweisen.

Der Vergaserheizkessel 1 kann auch anders geformt sein, z.B. für die Aufnahme von quaderförmigen Ballen.

### [Bezugszeichenliste]

- 1: Vergaserraum
- 2: Bechickungsöffnung
- 3: keramische Schicht
- 4: stählerne Wandungen
- 5: Kesselkörper
- 6: Kesselwasser
- 7: Schlitz
- 8: Schwelgase
- 9: Wirbelkammer
- 10: Sekundärluft
- 11: Nachbrennkammer
- 12: Primärluftöffnungen
- 13: Ventilatoreinheit
- 14: Gas
- 15: Gaszuführungskanäle
- 16: Gasaustrittsöffnungen
- 17: Gaszuführungskanal
- 18: beschleunigtes Heißgas
- 19: Elektromotor
- 20: Wellenlagerung
- 21: Raum für Anheizholz
- 22: Blechaußenverkleidung
- 23: Schüttdämmstoff
- 24: Fundament
- 25: Erdreich
- 26: Heizgaseintrittskanal
- 27: Bereich
- 2B: Wärmetauscherrohre
- 29: Abgasstutzen

## Patentansprüche

1. Verfahren zum Vergasen von großstückigen Festbrennstoffen in Form von Ballen aus halmartiger Biomasse in einer Vorrichtung gemäß Anspruch 4, bei dem der zu vergasende Festbrennstoff in einen Vergaserraum (1) eingegeben wird, durch Zugabe von Verbrennungsluft eine Teilverbrennung erfolgt, bei der Wärme frei wird, die die Vergasung des übrigen Materials bewirkt, wobei Gas (14) aus dem Vergaserraum (1) angesaugt und wieder zugeführt wird, das erzeugte Schwelgas (8) über einen nach unten im Vergaserraum (1) befindlichen Schlitz (7) in eine Wirbelbrennkammer (9) eintritt, wo es mit Sekundärluft (10) vermischt wird und dann in einer Nachbrennkammer (11) ausbrennt, die erzeugten Heizgase in einer Wärmetauschereinheit abgekühlt werden, wobei in einem wassergekühlten räumlichen Bereich (27) mit einer keramischen Beschichtung, in den das Heizgas tangential eintritt und aufsteigt, das Heizgas auf 600°C und darunter abgekühlt wird und eine weitere Wärmeabgabe an das Kesselwasser über Wärmetauscherrohre (28) erfolgt und das Heizgas im weiteren durch ein Saugzuggebläse als Abgas aus einem Abgasstutzen (29) der Wärmetauschereinheit kommend einem Schornstein zugeführt wird, **dadurch gekennzeichnet, dass**
im Vergaserraum (1) vorhandenes Gas (14) mit einer Ventilatoreinheit (13) im Vergaserraum (1) angesaugt wird und dann als beschleunigtes Heißgas (18) ohne Zumischung von Verbrennungsluft im Vergaserraum (1) gegen den zu vergasenden Ballen aus halmartiger Biomasse geblasen wird.

2. Verfahren nach Anspruch 1, **gekennzeichnet dadurch,**
**dass** das Gas (14) als beschleunigtes Heißgas (18) an die Stellen im Vergasungsraum (1) geführt wird, an denen sich das zu vergasende Material als Folge der Schwerkraftwirkung entlang bewegt.

3. Verfahren nach Anspruch 1, **dadurch gekennzeichnet,**
**dass** durch Änderung der Leistung der Ventilatoreinheit (13) der Vergasungsprozess gesteuert wird.

4. Vorrichtung zum Vergasen von großstückigen Festbrennstoffen in Form von Strohballen gemäß dem Verfahren nach Anspruch 1, mit einem Vergaserraum (1), der innen ganz mit einer keramischen Schicht ausgekleidet ist, um den Wärmeabfluss durch die stählernen Wände (4) des Kesselkörpers (5) in das Kesselwasser (6) gering zu halten, der über eine Primärluftzuführung (12) verfügt und in dem eine Ventilatoreinheit (13) angeordnet ist, die Gas (14) aus dem Vergaserraum (1) ansaugt und dieses durch mindestens einen an der Ventilatoreinheit (13) angeschlossenen Gaszuführungskanal (15, 17) über eine in dem mindestens einen Gaszuführkanal (15, 17) angeordnete Gasaustrittsöffnung (16) zum Strohballen hin abgibt, einem nach unten im Vergaserraum (1) angeordneten Schlitz (7) zum Durchtritt von Schwelgas (8) in eine nachfolgend angeordnete Wirbelbrennkammer (9), die über eine Sekundärluftzufuhr (10) verfügt, und einer folgenden Nachbrennkammer (11), einer Wärmetauschereinheit, die einen wassergekühlten, räumlichen Bereich (27) mit einer keramischen Beschichtung aufweist, in den das Heizgas tangential einleitbar ist, die Wärmetauscherrohr (28) besitzt und die ein Saugzuggebläse aufweist mit einem Abgasstutzen (29) mit einem Schornsteinanschluss, **dadurch gekennzeichnete dass**
ein Elektromotor (19) zum Antrieb der Ventilatoreinheit (13) außerhalb des Vergaserraumes (1) angeordnet ist.

5. Vorrichtung nach Anspruch 4, **gekennzeichnet dadurch, dass**
der Ventilatoreinheit (13) maximal zwei Gaszuführungskanäle (15, 17) mit Gasaustrittöffnungen (16) nachgeordnet sind.

6. Vorrichtung nach Anspruch 4 oder 5, **gekennzeichnet dadurch, dass**
die Ventilatoreinheit (13) und die Gasführungskanäle (15, 17) mechanisch und thermisch fest in entsprechenden Werkstoffen ausgeführt sind.

7. Vorrichtung nach einem der Ansprüche 4 bis 6,
**gekennzeichnet dadurch,**
**dass** der Vergaserraum (1) nach unten enger zulaufend, erweitert durch den Raum für Anheizholz (21) zum Anfeuern, ausgebildet ist.

## Claims

1. A method for the gasification of large pieces of solid fuels in the form of bales of stalk-like biomass in a device according to claim 4, in which the solid fuel to be gasified is placed in a gasification space (1), partially combusted by adding combustion air so that heat is released which brings about the gasification of the remaining material, wherein gas (14) is aspirated from, and returned to, the gasification space (1), the carbonization gas (8) generated enters a vortex burner chamber (9) via a slit (7) located in the bottom section of the gasification space (1), where it is intermixed with secondary air (10) and then burns out in an afterburner chamber (11), the heating gases generated are cooled down in a heat exchanger unit, wherein the heating gas cooled down to 600°C and bellow in a water-cooed spatial region (27) with a ceramic coating which the heating gas enters tangentially and in which it rises, and further heat is dissipated to the boiler water via heat exchanger pipes (28), and the heating gas, exiting as waste gas from a waste gas nozzle (29) of the heat exchanger unit, is conducted to a chimney by an induced-draft fan,
**characterized in that**
gas (14) that is present in the gasification space (1) is aspirated using a ventilator unit (13) in the gasification space (1) and is then blown as accelerated heating gas (18) without admixing combustion air in the gasification space (1) against the bale of stalk-like biomass to be gasified.

2. The method according to claim 1, **characterized in that**
the gas (14) is supplied as accelerated heating gas (18) to the places in the gasification space (1) along which the material to be gasified moves as a result of the action of gravity.

3. The method according to claim 1, **characterized in that**
the gasification process is controlled by changing the output of the ventilator unit (13).

4. A device for the gasification of large pieces of solid fuels in the form of straw bales according to the method according to claim 1, having a gasification space (1) that is fully lined inside with a ceramic layer to keep the flow of heat through the steel walls (4) of the body of the boiler (5) into the boiler water (6) as low as possible, and equipped with a primary air supply (12) in which a ventilator unit (13) is arranged which aspirates gas (14) from the gasification space (1) and supplies it to the straw bale through at least one gas supply duct (15, 17) connected to the ventilator unit (13) via a gas outlet opening (16) disposed in the at least one gas supply duct (15, 17), and with a slit (7) provided in the bottom section of the gasification space (1) through which carbonization gas (8) enters a downstream vortex burner chamber (9), which has a secondary air supply (10), and a downstream afterburner chamber (11), a heat exchanger unit comprising a water-cooled spatial region (27) with a ceramic coating, into which the heating gas can be introduced tangentially, which has a heat exchanger pipe (28) and an induced-draft fan with a waste gas nozzle (29) connected to a chimney, **characterized in that**
an electric motor (19) for driving the ventilator unit (13) is disposed outside the gasification space (1).

5. The device according to claim 4, **characterized in that**
a maximum of two gas supply ducts (15, 17) with gas outlet openings (16) are disposed downstream of the ventilator unit (13).

6. The device according to claim 4 or 5, **characterized in that**
the ventilator unit (13) and the gas supply ducts (15, 17) are built mechanically and thermally strong using suitable materials.

7. The device according to any one of claims 4 to 6, **characterized in that**
the gasification space (1) becomes narrower towards the bottom and is expanded by the space for kindling wood (21) used for ignition.

## Revendications

1. Procédé pour la gazéification de combustibles solides de grandes dimensions, sous la forme de balles de biomasse de type paille, dans un dispositif conforme à la revendication 4, au cours duquel le combustible solide devant être gazéifié est introduit dans une chambre de carburateur (1), une combustion partielle a lieu par l'addition d'air-de combustion, au cours de laquelle de la chaleur est dégagée, laquelle entraîne la gazéification du matériau restant, du gaz (14) étant aspiré hors de la chambre de carburateur (1) et réintroduit, le gaz de carbonisation (8) produit entrant dans une chambre de combustion à turbulence (9) par une fente (7) située vers le bas dans la chambre de carburateur (1), où il est mélangé à de l'air secondaire (10) et ensuite consommé par combustion dans une chambre de postcombustion (11), les gaz de chauffage produits étant refroidis dans une unité d'échangeur de chaleur, le gaz de chauffage étant refroidi à 600 °C et moins dans une zone spatiale (27) refroidie à l'eau, avec une couche en céramique, dans laquelle le gaz de chauffage entre de façon tangentielle et monte, et une transmission de chaleur à l'eau de chaudière supplémentaire se produisant par des conduits d'échangeur de chaleur (28) et le gaz de chauffage, comme gaz d'échappement provenant d'une tubulure d'échappement (29) de l'unité d'échangeur de chaleur, étant en outre amené à une cheminée par un ventilateur de tirage par aspiration, **caractérisé en ce que**
du gaz (14) présent dans la chambre de carburateur (1) est aspiré dans la chambre de carburateur (1) par une unité de ventilation (13) et ensuite envoyé dans la chambre de carburateur (1) contre les balles de biomasse de type paille devant être gazéifiées, comme gaz chaud (18) accéléré, sans mélange avec de l'air de combustion.

2. Procédé selon la revendication 1, **caractérisé en ce que**
le gaz (14) est amené comme gaz chaud (18) accéléré aux endroits de la chambre de carburateur (1) auxquels le matériau devant être gazéifié se déplace sous l'effet de la pesanteur.

3. Procédé selon la revendication 1, **caractérisé en ce que**
le processus de gazéification est contrôlé par la modification de la puissante de l'unité de ventilation (13).

4. Procédé pour la gazéification de combustibles solides de grandes dimensions, sous la forme de balles de paille selon la revendication 1, avec une chambre de carburateur (1), laquelle est revêtue à l'intérieur d'une couche de céramique, afin de maintenir la déperdition de chaleur par les parois (4) en acier du corps de chaudière (5) dans l'eau de chaudière (6), laquelle chambre dispose d'une amenée d'air primaire (12) et dans laquelle une unité de ventilation (13) est disposée, laquelle aspire du gaz (14) hors de la chambre de carburateur (1) et le transmet vers les balles de paille par au moins un canal d'amenée de gaz (15, 17) branché sur l'unité de ventilation (13) par un orifice de sortie de gaz (16) disposé dans l'au moins un canal d'amenée de gaz (15, 17), avec une fente (7) disposée vers le bas dans la chambre de carburateur (1) pour le passage du gaz de carbonisation (8) dans une chambre de combustion à turbulence (9) disposée en aval, laquelle dispose d'une amenée d'air secondaire (10), et avec une chambre de postcombustion (11) en aval, avec une unité d'échangeur de chaleur, laquelle présente une zone spatiale (27) refroidie à l'eau avec un revêtement en céramique, dans laquelle le gaz de chauffage peut être introduit de façon tangentielle, laquelle possède un conduit d'échangeur de chaleur (28) et laquelle présente un ventilateur de tirage par aspiration avec une tubulure d'échappement (29) avec un raccordement de cheminée, **caractérisé en ce que**
un moteur électrique (19) est disposé à l'extérieur de la chambre de carburateur (1) pour l'entraînement de l'unité de ventilation (13).

5. Dispositif selon la revendication 4, **caractérisé en ce que**
deux canaux d'amenée de gaz (15, 17) au maximum avec deux orifices de sortie de gaz (16) sont disposés en aval de l'unité de ventilation (13).

6. Dispositif selon la revendication 4 ou 5, **caractérisé en ce que**
l'unité de ventilation (13) et les canaux d'amenée de gaz (15, 17) sont réalisés avec résistance mécanique et thermique, dans des matériaux adéquats.

7. Dispositif selon l'une des revendications 4 à 6, **caractérisé en ce que**
la chambre de carburateur (1) est formée en se rétrécissant vers le bas, complétée par la chambre pour le bois de chauffage (21) pour l'allumage.
